# EUROPÄISCHE PATENTSCHRIFT

(11) **EP 1 589 393 B1**
(45) Veröffentlichungstag und Bekanntmachung des Hinweises auf die Patenterteilung: **13.06.2007**
(21) Anmeldenummer: 05008386.4
(22) Anmeldetag: 18.04.2005
(51) Int. Cl.: G05D 23/13, F24H 1/00, F24D 17/00

(54) **Thermostatventilanordnung für ein druckloses Heisswassergerät**
Thermostatic valve arrangment for an unpressurised water heater
Arrangement d' une soupape thermostatique pour un chauffe-eau sans pression

(30) Priorität: 21.04.2004 DE 102004019921
(43) Veröffentlichungstag der Anmeldung: 26.10.2005
(73) Patentinhaber: Kludi GmbH & Co. KG, 58706 Menden (DE)
(72) Erfinder: Sommer, Frank, 58640 Iserlohn (DE)
(74) Vertreter: Tarvenkorn, Oliver

(56) Entgegenhaltungen:
- CH-A- 445 787
- DE-A1- 2 365 571
- DE-A1- 2 945 879
- DE-C1- 3 836 877
- US-A- 4 424 767

## Beschreibung

Die Erfindung betrifft eine Thermostatventilanordnung für ein druckloses Heißwassergerät.

Heißwassergeräte sind einfache und kostengünstige Geräte zur Versorgung einer Zapfstelle mit Heißwasser, wobei nur ein Kaltwasser- und ein Elektroanschluss notwendig sind. Über elektrische Energie wird Wasser in einem Heizbehälter erhitzt. Die Förderung zur Zapfstelle beruht allein auf einem Förderdruck, der sich ohne weitere Hilfseinrichtungen wie Pumpen etc. dadurch einstellt, dass im Heizbehälter Dichteunterschiede im Wasser in Folge der Aufwärmung eintreten und dass mit dem Öffnen der Armatur warmes Wassers im Heizbehälter durch nachfließendes Frischwasser verdrängt wird. Da bei den kostengünstigen und Platz sparenden Heißwassergeräten der Heizbehälter nicht als Druckbehälter ausgeführt werden kann, muss das Heißwassergerät drucklos betrieben werden, das heißt, es muss stets eine offene Verbindung zum Wasserauslauf bestehen.

Aus den vorgenannten Gründen ist der Einsatz eines für Sanitär- und Küchenarmaturen an sich bekannten Thermostatventils nicht möglich, wenn die Warmwasserversorgung durch ein drucklos zu betreibendes Heißwassergerät erfolgt, da das Thermostatventil auch eine Betriebsstellung einnehmen kann, in dem der Heißwasserzulauf vollständig und damit druckdicht abgesperrt ist. Somit würde die Gefahr eines Berstens des Heizbehälters im Heißwassergerät bestehen. Eine Thermostatventilanordnung für eine druckloses Heißwassergerät ist aus der DE 29 45 879 bekannt.

Es stellt sich daher die Aufgabe, eine komfortable Temperaturregelung auch dort zu ermöglichen, wo ein druckloses Heißwassergerät eingesetzt wird.

Erfindungsgemäß wird diese Aufgabe mit den Merkmalen des Anspruchs 1 gelöst.

Dadurch, dass eine Bypassleitung vorgesehen ist, die das Thermostatventil überbrückt, besteht stets eine offene Verbindung zwischen dem Heißwassergerät und dem Mischwasserauslaufelement, so dass beim Aufheizen des Wassers ein Druckanstieg auch dann gegen Umgebungsdruck abzubauen ist, wenn das Thermostatventil auf eine niedrige Temperatur eingestellt ist und deshalb der Warmwasserzulauf vollständig abgesperrt ist.

Bei dem Mischwasserauslaufelement handelt es sich vorzugsweise um eine Sanitär- oder Küchenarmatur, insbesondere eine Waschtischarmatur für drucklose Heißwassergeräte.

Der Widerstand in der Bypassleitung ist so ausgelegt, dass nur ein sehr geringer Volumenstrom diese passieren kann, während der Großteil des Warmwassers über die Warmwasserzulaufleitung in das Thermostatventil und von dort zur Armatur fließt. Der Widerstand kann entweder durch einen geringen Querschnitt des Rohrs bewirkt werden, aus dem die Bypassleitung gebildet ist, oder aber durch eine Drossel, über die der Fließwiderstand einstellbar ist.

Das Thermostatventil kann in den erfindungsgemäßen Thermostatventilanordnungen entweder in die Armatur oder in das Heißwassergerät integriert sein, es kann aber auch als separate Baugruppe in die Wasserstränge eingesetzt werden, wodurch eine Nachrüstung bestehender Installationen möglich ist.

Des weiteren kann die Bypassleitung entweder direkt in das Thermostatventil integriert sein, oder als externes Bauelement in der Thermostatventilanordnung vorgesehen sein. Dabei können die an sich bekannten Thermostatventile mit externen Bypassleitungen so ergänzt werden, dass sie eine geregelte Warmwasserzufuhr von drucklosen Heißwassergeräten ermöglichen.

Bei den integrierten Lösungen werden Bypässe im Thermostatventil beispielsweise durch Längsnuten im Kolben und/oder in der Kolbenbohrung oder durch sonstige Ausnehmungen an der Kolbenstirnseite oder dem Kolbenumfang im Bereich eines Warmwasserzulaufs im ventilgehäuse auf einfache Weise erreicht. Vorhandene Konstruktionen von Thermostatventilen können durch Einfügung eines zusätzlichen Arbeitsschritts mit spanender Bearbeitung in ansonsten unveränderter Weise hergestellt werden.

Möglich ist weiterhin, den Kolbenweg zu begrenzen. Ein Kolben ist vorgesehen, der in einer Kolbenbohrung des Thermostatventils verschiebbar gelagert ist und der in seiner einen Endstellung den Querschnitt eines Warmwasserzulaufs nur teilweise abdeckt. Durch diese nur teilweise Abdichtung des Warmwasserzulaufs durch den Kolben in seiner Endstellung wird dann ein Leckstrom ermöglicht und letztlich die Bypassleitung gebildet.

Weitere vorteilhafte Ausgestaltungen sind den weiteren Unteransprüchen zu entnehmen und werden nachfolgend mit Bezug auf die Zeichnung näher erläutert. Die Figuren zeigen im einzelnen:
- Fig. 1a:: eine erste Thermostatventilanordnung in schematischer Ansicht;
- Fig. 1b:: ein Thermostatventil der ersten Thermostatventilanordnung im Schnitt;
- Fig. 2, 3:: eine zweite und dritte Thermostatventilanordnung, jeweils in schematischer Ansicht.
- Fig. 4:: eine vierte Thermostatventilanordnung, die jedoch nicht zur Erfindung gehört.

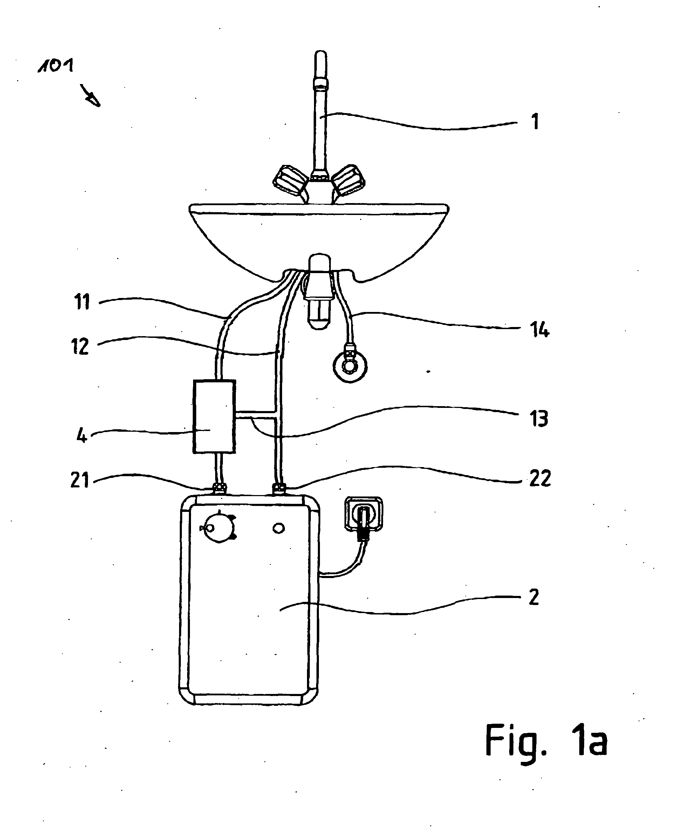

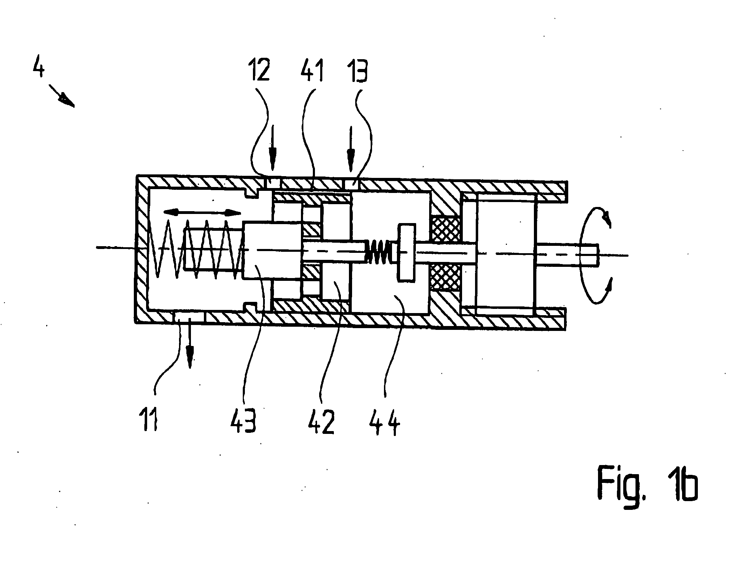

Fig. 1a zeigt eine erste erfindungsgemäße Thermostatventilanordnung 101. Diese besteht im wesentlichen aus einer Niederdruck-Armatur 1 als Mischwasserauslauf, einem Heißwassergerät 2 und einem Thermostatventil 4.

Eine Kaltwasserzulaufleitung 14 ist im dargestellten Ausführungsbeispiel mit der Armatur 1 verbunden und verzweigt dort in eine Kaltwasserablaufleitung 12, die über einen Kaltwasserzulauf 22 das Heißwassergerät 2 speist.

Außerdem zweigt von der Kaltwasserablaufleitung 12 eine Kaltwasserzulaufleitung 13 für das Thermostatventil 4 ab. Der Warmwasserzulauf des Thermostatventils 4 ist mit dem Warmwasserablauf 21 des Heißwassergeräts 2 verbunden. Damit werden sowohl-Warmwasser wie auch Kaltwasser dem Thermostatventil 4 zugeführt und darin so gemischt, dass Mischwasser mit einer vorgewählten Temperatur über eine Mischwasserzulaufleitung 11 der Armatur 1 zugeführt wird.

Wie die Schnittansicht in Fig. 1b zeigt, ist die Bypassleitung durch eine sich axial erstreckende Nut 41 am Außenumfang eines Kolbens 42 des Thermostatventils 4 gebildet. Der Kolben 42 ist über ein Thermoausdehnungselement 43 innerhalb einer Kolbenbohrung zwischen einem Warmwasserzulauf 12 und einem Kaltwasserzulauf 13 verschiebbar. Die Nut 41 ermöglicht, dass auch dann eine geringe Menge an Wasser von dem Warmwasserzulauf 12 in das Thermostatventil 4 strömen kann, wenn der Kolben 42 so positioniert ist, dass er den Warmwasserzulauf 12 abdeckt.

Die gleiche Wirkung kann durch Auskerbungen des Kolbens 42 an seiner in Fig. 1b linken Stirnseite erreicht werden, und zwar in dem Umfangsbereich des Kolbens 42 unmittelbar vor dem Warmwasserzulauf 12.

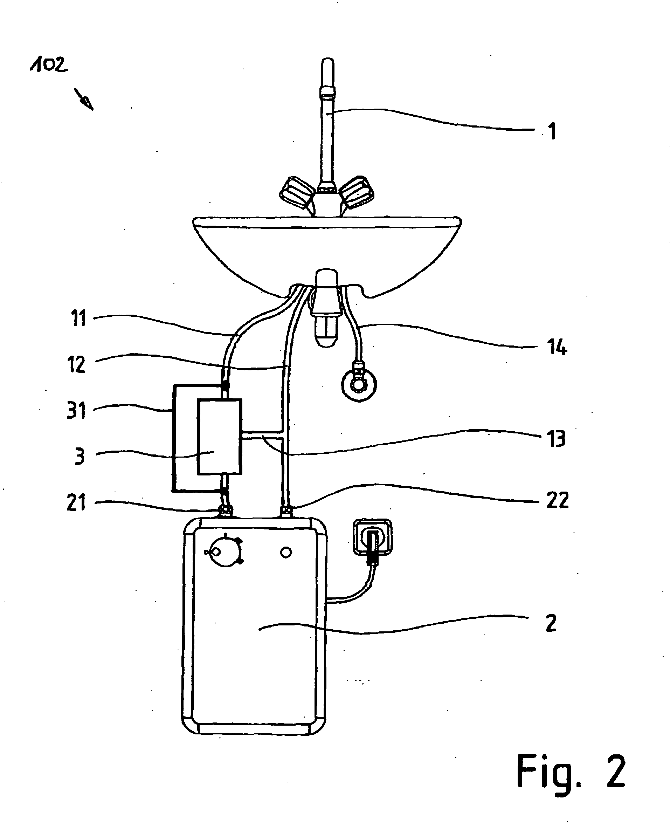

Eine zweite Thermostatventilanordnung 102 ist in Fig. 2 dargestellt. Hier ist eine externe Bypassleitung 31 mit geringem Querschnitt und/oder mit einer Drossel vorgesehen. Über die Bypassleitung 31 kann vorbei an dem eventuell vollständig geschlossenen Thermostatventil 3 ein Druck im Heißwassergerät 2 abgebaut werden.

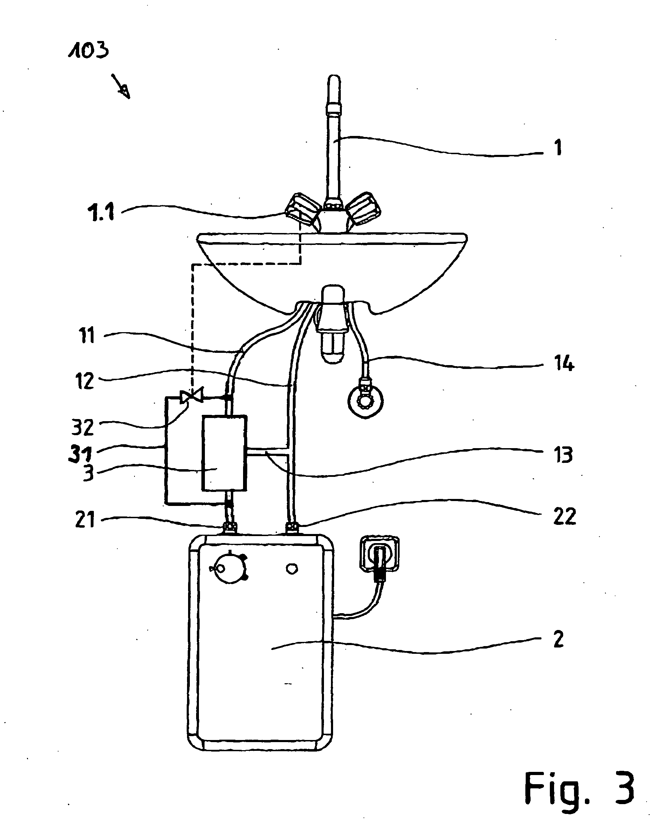

In einer dritten Thermostatventilanordnung 103, die in Fig. 3 dargestellt ist, ist vorgesehen, dass die Bypassleitung 31 wenigstens ein Absperrelement 32 aufweist, das mit einem Absperrelement 1.1 der Sanitärarmatur 1 gegensinnig gekoppelt ist und das mit dem Schließen des Absperrelements 1.1 geöffnet wird: wird der Wasserhahn 1.1 geschlossen, so wird die Bypassleitung 31 geöffnet und umgekehrt. Dadurch wird bei geschlossener Armatur 1 weiterhin ein Druckabbau über die Bypassleitung 31 ermöglicht. Im Betrieb hingegen, wenn Warmwasser aus dem Heißwassergerät 2 über das Thermostatventil 3 zur Armatur 1 hin läuft, ist die Bypassleitung 31 geschlossen, so dass hierüber kein Druckverlust im Warmwasserstrang eintritt und die Temperaturregelung im Thermostatventil 3 unbeeinflusst von einem etwaigen in der Bypassleitung fließenden Teilvolumenstrom des Warmwassers erfolgen kann.

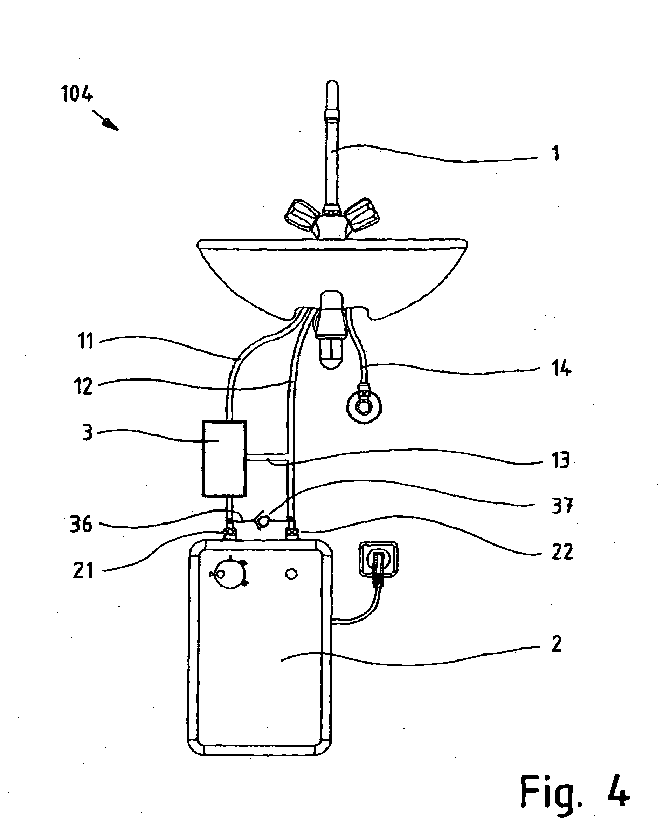

In der nicht zur Erfindung gehörigen Thermostatventilanordnung 104 gemäß Fig. 4 sind der Kaltwasserzulauf 22 und der Warmwasserablauf 21 des Heißwassergeräts 2 direkt über eine Bypassleitung 36 miteinander verbunden, in die ein Rückschlagventil 37 eingesetzt ist. Kaltwasser kann wegen des Rückstromventils nicht in den Warmwasserablauf 21 des Heißwassergeräts 2 einströmen, wohl aber kann ein Druckanstieg im Heißwassergerät während des Heizbetriebs über die Bypassleitung 36 in die drucklose Kaltwasserablaufleitung 12 abgebaut werden.

## Patentansprüche

1. Thermostatventilanordnung (101; 102; 103; 104) für ein druckloses Heißwassergerät (2) mit wenigstens:
- einem Mischwasserauslaufelement mit einer-Mischwasserzulaufleitung (11),
- dem Heißwassergerät (2) mit wenigstens
• einem Kaltwasserzulauf (22) und
• einem Warmwasserablauf (21), der mit der Mischwasserzulaufleitung (11) verbunden ist,
- und mit einem Thermostatventil (3; 4),
• das zwischen dem Warmwasserablauf (21) des Heißwassergeräts (2) und der Mischwässerzulaufleitung (11) des Mischwasserauslaufelements angeordnet ist und
• das mit einer Kaltwasserzulaufleitung (13) verbunden ist, **dadurch gekennzeichnet, daß** das Thermostatventil-(3-; 4) eine Bypassleitung (31, 36; 41) aufweist, durch die wenigstens eine Teilmenge des am Warmwasserablauf (21) des Heißwassergeräts (2) abgegebenen Warmwasserstroms in die Mischwasserzulaufleitung (11) überzuleiten ist.

2. Thermostatventilanordnung (101, 102, 103, 104) nach Anspruch 1, **dadurch gekennzeichnet, dass** das Mischwasserauslaufelement eine Armatur (1) ist, an der
- die Mischwasserzulaufleitung (11),
- eine Kaltwasserzulaufleitung (14) und
- eine Kaltwasserablaufleitung (12), die mit der Kaltwasserzulaufleitung (13) des Thermostatventils 3, 4) verbunden ist,
münden.

3. Thermostatventilanordnung (101) nach Anspruch 1 oder 2, **dadurch gekennzeichnet, dass** die Bypassleitung durch wenigstens eine Nut (41) gebildet ist, die in Längsrichtung in einen Kolben (42) des Thermostatventils (4) eingebracht ist, welcher in einer Kolbenbohrung (44) verschiebbar angeordnet ist und mit dem wenigstens ein Warmwasserzulauf im Thermostatventil (4) wenigstens teilweise absperrbar ist.

4. Thermostatventilanordnung nach Anspruch 1 oder 2, **dadurch gekennzeichnet, dass** die Bypassleitung durch wenigstens eine Nut gebildet ist, die in Längsrichtung in eine Kolbenbohrung des Thermostatventils eingebracht ist, in welcher ein Kolben verschiebbar angeordnet ist und mit dem wenigstens ein Warmwasserzulauf im Thermostatventil wenigstens teilweise absperrbar ist.

5. Thermostatventilanordnung nach Anspruch 1 oder 2, **dadurch gekennzeichnet, dass** in eine Kolbenbohrung des Thermostatventils eine Kolbenbohrung eingebracht ist, in welcher ein Kolben verschiebbar angeordnet ist, mit dem wenigstens ein Warmwasserzulauf im Thermostatventil wenigstens teilweise absperrbar ist, wobei der Kolben in einem vor dem Warmwasserzulauf anzuordnenden Umfangsbereich mit wenigstens einer Ausnehmung versehen ist.

6. Thermostatventilanordnung nach Anspruch 1 oder 2, **dadurch gekennzeichnet, dass** ein Kolben vorgesehen ist, der in einer Kolbenbohrung des Thermostatventils verschiebbar gelagert ist und der in seiner einen Endstellung den Querschnitt eines Warmwasserzulaufs nur teilweise abdeckt, wobei durch den in der Endstellung nicht durch den Kolben abgedeckten Querschnittsbereich die Bypassleitung gebildet ist.

7. Thermostatventilanordnung (102) nach Anspruch 1 oder 2, **gekennzeichnet durch** eine externe Bypassleitung (31), **durch** die wenigstens ein Teil des vom Warmwasserablauf (21) des Heißwassergeräts (2) ausgehenden Warmwasserstroms am Thermostatventil (3) vorbei geführt ist.

8. Thermostatventilanordnung (103) nach Anspruch 7, **dadurch gekennzeichnet, dass** die Bypassleitung (31) wenigstens ein Absperrelement (32) aufweist, das mit einem Absperrelement (1.1) der Armatur (1) gegensinnig gekoppelt ist und das mit dem Schließen des Absperrelements (1.1) geöffnet wird.

9. Thermostatventilanordnung (102) nach einem der Ansprüche 1 bis 8, **dadurch gekennzeichnet, dass** die Bypassleitung (31) eine Drossel aufweist.

## Claims

1. Thermostat valve arrangement (101; 102; 103; 104) for a pressure-free hot water boiler (2), with at least:
- a mixed water outflow element with a mixed water inflow pipeline (11),
- the hot water boiler (2) with at least:
. a cold water inflow (22) and
. a hot water outflow (21) which is connected to the mixed water inflow pipeline (11)
- and with a thermostat valve (3; 4)
. which is arranged between the hot water outflow (21) of the hot water boiler (2) and the mixed water inflow pipeline (11) of the mixed water outflow element and
. which is connected to a cold water inflow pipeline (13),
**characterised in that** the thermostat valve (3; 4) comprises a bypass line (31, 36; 41), through which at least a partial amount of the hot water flow discharged at the hot water outflow (21) of the hot water boiler (2) is to be conveyed into the mixed water supply pipeline (11).

2. Thermostat valve arrangement (101, 102, 103, 104) according to claim 1, **characterised in that** the mixed water outflow element is a fixture (1), to which the following are connected:
- the mixed water inflow pipeline (11)
- a cold water inflow pipeline (14) and
- a cold water outflow pipeline (12) which is connected to the cold water inflow pipeline (13) of the thermostat valve (3, 4).

3. Thermostat valve arrangement (101) according to claim 1 or 2, **characterised in that** the bypass line is formed by at least one groove (41) which is incorporated in the longitudinal direction into a piston (42) of the thermostat valve (4) which is arranged so as to be displaceable in a piston bore (44) and with which at least a hot water inflow in the thermostat valve (4) can be at least partially shut off.

4. Thermostat valve arrangement according to claim 1 or 2, **characterised in that** the bypass line is formed by at least one groove which is incorporated in the longitudinal direction into a piston bore of the thermostat valve, in which a piston is arranged so as to be displaceable, and with which at least a hot water inflow in the thermostat valve can be at least partially shut off.

5. Thermostat valve arrangement according to claim 1 or 2, **characterised in that** a piston bore is incorporated in the thermostat valve in which a piston is slideably located, with which at least a hot water inflow in the thermostat valve can be at least partially shut off, whereby the piston is provided in a peripheral region to be arranged before the hot water inflow with at least one recess.

6. Thermostat valve arrangement according to claim 1 or 2, **characterised in that** a piston is provided which is mounted so as to be displaceable in a piston bore and which, in its end position, only partially covers the cross-section of a hot water inflow, whereby the bypass line is formed by the cross-sectional region not covered by the piston in the end position.

7. Thermostat valve arrangement (102) according to claim 1 or 2, **characterised by** an external bypass line (31), through which at least a proportion of the hot water flow leaving the hot water outflow (21) of the hot water boiler (2) bypasses the thermostat valve (3).

8. Thermostat valve arrangement (103) according to claim 7, **characterised in that** the bypass line (31) comprises at least one valve (32) which is coupled in the opposite direction with a valve (1.1) of the fixture (1) and which is opened with the closure of the valve (1.1).

9. Thermostat valve arrangement (102) according to one of the claims 1 to 8, **characterised in that** the bypass line (31) comprises a throttle element.

## Revendications

1. Arrangement de soupape thermostatique (101 ; 102; 103; 104) pour un chauffe-eau sans pression (2) incluant au moins:
- un élément de sortie d'eau mélangée équipé d'une conduite d'amenée (11) d'eau mélangée,
- le chauffe-eau (2) qui comporte au moins
• une amenée (22) d'eau froide et
• une sortie (21) d'eau chaude, qui est connectée à la conduite d'amenée (11) d'eau mélangée, et
- une soupape thermostatique (3, 4),
• qui est disposée entre la sortie d'eau chaude (21) du chauffe-eau (2) et la conduite (11) d'amenée d'eau mélangée de l'élément de sortie d'eau mélangée, et
• qui est connectée à une conduite d'amenée (13) d'eau froide,
**caractérisé en ce que** la soupape thermostatique (3; 4) comporte une conduite de contournement (31, 36; 41), à travers laquelle au moins un débit partiel du courant d'eau chaude qui provient de la sortie (21) d'eau chaude du chauffe-eau (2) doit être transféré vers la conduite d'amenée (11) d'eau mélangée.

2. Arrangement de soupape thermostatique (101, 102, 103, 104) selon la revendication 1, **caractérisé en ce que** l'élément de sortie d'eau mélangée est une robinetterie (1) dans lequel débouchent
- la conduite d'amenée (11) d'eau mélangée,
- une conduite d'amenée (14) d'eau froide, et
- une conduite de sortie (12) d'eau froide, qui est connectée avec l'amenée (13) d'eau froide de la soupape thermostatique (3, 4).

3. Arrangement (101) de soupape thermostatique selon la revendication 1 ou 2, **caractérisé en ce que** la conduite de contournement consiste en au moins une rainure (41) qui est ménagée en direction longitudinale dans un piston (42) de la soupape thermostatique (4), qui est monté à coulissement dans un alésage (44) de piston et permet de bloquer au moins partiellement au moins une amenée d'eau chaude dans la soupape thermostatique (4).

4. Arrangement de soupape thermostatique selon la revendication 1 ou 2, **caractérisé en ce que** la conduite de contournement consiste en au moins une rainure qui est ménagée en direction longitudinale dans un alésage de piston de la soupape thermostatique, alésage dans lequel un piston est monté à coulissement et permet de bloquer au moins partiellement une amenée d'eau chaude dans la soupape thermostatique.

5. Arrangement de soupape thermostatique selon la revendication 1 ou 2, **caractérisé en ce qu'**un piston qui permet de bloquer au moins partiellement au moins une amenée d'eau chaude dans la soupape thermostatique est monté à coulissement dans un alésage de piston de la soupape thermostatique, et **en ce qu'**au moins un évidement est ménagé dans le piston dans une zone périphérique à arranger avant l'amenée d'eau chaude.

6. Arrangement de soupape thermostatique selon la revendication 1 ou 2, **caractérisé en ce qu'**il comprend un piston qui est logé à coulissement dans un alésage de piston de la soupape thermostatique et qui ne recouvre que partiellement, dans sa première position d'extrémité, la section transversale d'une amenée d'eau chaude, et **en ce que** la conduite de contournement est constituée par la zone de la section transversale qui n'est pas recouverte par le piston dans cette position d'extrémité.

7. Arrangement (102) de soupape thermostatique selon la revendication 1 ou 2, **caractérisé par** une conduite externe de contournement (31) à travers laquelle au moins un courant d'eau sortant de la sortie (21) d'eau chaude du chauffe-eau (2) contourne la soupape thermostatique (3).

8. Arrangement (103) de soupape thermostatique selon la revendication 7, **caractérisé en ce que** la conduite de contournement (31) comporte au moins un élément de blocage (32) qui est accouplé à contresens avec un élément de blocage (1.1) de la robinetterie (1), et qui est ouvert par la fermeture de l'élément de blocage (1.1).

9. Arrangement de soupape thermostatique (102) selon l'une quelconque des revendications précédentes, **caractérisé en ce que** la conduite de contournement (31) comporte un étranglement.
